# EUROPEAN PATENT APPLICATION

(11) **EP 4 574 634 A1**
(43) Date of publication of application: **25.06.2025**
(21) Application number: 23218372.3
(22) Date of filing: 19.12.2023
(51) Int. Cl.: B62D 53/08, B62D 35/00

(54) **SYSTEM AND METHOD FOR CONTROLLING A FIFTH WHEEL MOTION**

(71) Applicant: VOLVO TRUCK CORPORATION, 405 08 Göteborg (SE)
(72) Inventor: VALLERVY, Axel, 424 70 Olofstorp (SE); HELLGREN, Jakob, 438 34 Landvetter (SE)
(74) Representative: Zacco Sweden AB

(57) **Abstract**

A system for controlling the distance between a vehicle and a trailer is disclosed. The vehicle and the trailer form a vehicle combination. The system comprises a fifth wheel mounted on the vehicle and configured to couple the trailer to the vehicle, a linear guide for guiding the fifth wheel such that the fifth wheel performs a longitudinal motion along the vehicle, and a controller configured to control a fifth wheel position on the basis of at least one of a preferred front and/or rear axle load and data associated with an upcoming event, to thereby set the distance between the vehicle and the trailer.

## Description

### TECHNICAL FIELD

The disclosure relates generally to a system for controlling the distance between a vehicle and a trailer. In particular aspects, the disclosure relates to a system and method for controlling a fifth wheel sliding. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

The distance from a vehicle to the front of a trailer need to preferably be large enough to ensure that the vehicle and the trailer do not interfere with each other and possibly cause damage to the vehicle or the trailer and to allow a driver to enter and work with connection of air/electrical hoses during trailer coupling and de-coupling. In some cases, on the other hand, the distance between the vehicle and the trailer need to be as small as possible to reduce the air resistance of the vehicle and the trailer.

By integrating a fifth wheel movement with a controller it is possible to control the distance between the vehicle and the trailer. The fifth wheel controller can automatically control the fifth wheel to thereby adapt the distance between the trailer and the vehicle to a desired scenario.

### SUMMARY

According to a first aspect of the disclosure, a system for controlling the distance between a vehicle and a trailer is disclosed. The vehicle and the trailer form a vehicle combination. The system comprises a fifth wheel, a linear guide, and a controller. The fifth wheel is mounted on the vehicle and configured to couple the trailer to the vehicle. The linear guide is for guiding the fifth wheel such that the fifth wheel performs a longitudinal motion along the vehicle. The controller is configured to control a fifth wheel position on the basis of at least one of a preferred front and/or rear axle load and data associated with an upcoming event, to thereby set the distance between the vehicle and the trailer.

The first aspect of the disclosure may seek to optimize the distance between the vehicle and the trailer depending on the specific operation of the vehicle combination. In some examples, the first aspect of the disclosure may seek to optimize air drag between the vehicle and the trailer. A technical benefit may include improving energy economy of the vehicle.

The gap between the vehicle and the trailer gives rise to air turbulence which affects the air resistance. The greater the gap is, the stronger the air turbulence becomes, and the stronger the air turbulence is, the greater the air resistance becomes. Reducing the distance between the vehicle and the trailer leads to reduced air drag and hence reduced fuel consumption of the vehicle.

The distance between the vehicle and the trailer can be controlled by controlling the position of the fifth wheel. The fifth wheel can slide forward such that it reduces the distance between the vehicle and the trailer or it can slide backwards such that the distance between the trailer and the vehicle is increased. Forward sliding of the fifth wheel causes reduction of the air resistance of the vehicle combination when the vehicle combination is travelling at high speeds and thus improved aerodynamics of the vehicle combination. However, reducing the distance between the vehicle and the trailer can be undesired in some scenarios, such as when the vehicle combination is turning. Namely, sharp turns may not be possible when the gap between the trailer and the vehicle is small. If the distance between the vehicle and the trailer is too small and the vehicle is turning, a damage of the vehicle and/or the trailer may occur. Therefore, there is a need for automatic control of the vehicle-trailer distance.

In the present context, the term vehicle refers to a truck, a towing vehicle, a tractor unit, or an articulated lorry. The vehicle is typically a heavy-duty vehicle. It should be understood that the vehicle is configured to have a trailer, typically a semi-trailer, attached. The vehicle typically has a fifth wheel coupling for connecting the trailer. It should be understood that the vehicle may comprise an attached dolly on which the fifth wheel coupling is arranged. In the present context, the term trailer is used to refer to any wheeled constructions configured to be connected to the vehicle by a fifth wheel coupling, a wheeled platform, caravan, coach, semi-trailer, etc. The vehicle and the trailer, when connected, form a vehicle combination, e.g. semi-trailer truck.

The fifth wheel refers to a coupling device configured to couple the trailer to the vehicle. The fifth-wheel coupling provides a coupling connection between the trailer and the vehicle. The fifth wheel coupling may have any shape and design known in the art of fifth wheel couplings. For instance, the coupling may consist of a kingpin, e.g. a 2-or-3½-inch-diameter (50.8 or 88.9 mm) vertical steel pin, protruding from the bottom of the front of the trailer, and the fifth wheel on the rear of the vehicle. The fifth wheel may be a horseshoe-shaped coupling device. As the connected vehicle turns, the downward-facing surface of the trailer (with the kingpin at the center) rotates against the upward-facing surface of the fixed fifth wheel, which does not rotate.

In the present context, the linear guide refers to a sliding rail configured to receive the king pin and the fifth wheel to thereby allow, preferably continuous, sliding of the fifth wheel along the guide. The linear guide may be implemented in various ways, such as for instance as a rack and pinion, a linear ball slide, or the like. The linear guide guides the fifth wheel such that the fifth wheel performs a longitudinal motion along the vehicle, thereby defining the distance between the vehicle and the trailer. In particular, the longitudinal motion of the fifth wheel ensures changes of the distance between the vehicle and the trailer. The longitudinal motion may refer to movements of the vehicle with respect to the trailer along the main axle of the vehicle and/or the main axle of trailer. The fifth wheel may slide forward along the linear guide such that the trailer comes closer to the vehicle, such that the distance between the vehicle and the trailer is decreased. Alternatively, the fifth wheel may slide backward along the linear guide such that the trailer moves further away from the vehicle, such that the distance between the vehicle and the trailer is increased.

The controller may form part of any controller in the vehicle or may be a separate controller dedicated only to control the fifth wheel coupling and its position along the linear guide, thereby controlling the distance between the trailer and the vehicle. The controller is configured to control a fifth wheel position on the basis of at least one of a preferred front and/or rear axle load and data associated with an upcoming event, to thereby set the distance between the vehicle and the trailer.

The preferred front and/or rear axle load may be predetermined values or may be calculated by the controller based on real-time parameters related to driving and/or based on a current front/rear axle load. Traction and steering may also be used for controlling the distance between the trailer. The traction and steering may be based on the preferred front and/or rear axle load. Namely, with an adapted axle load the traction may be affected, for example by moving the fifth wheel (including the trailer) rearwards, the traction on the wheels on the rear axle may increase. By instead moving the fifth wheel (including the trailer) forwards, the steering may be improved as the weight on the front axle will increase.

The preferred front and/or rear axle load may also be determined based on road restrictions on axle load (e.g. external data related to planned route) and energy consumption.

The data associated with an upcoming event may include data associated with an assignment that the vehicle combination is going to perform. The upcoming assignment may include upcoming maneuvering, ferry transport and trailer coupling/de-coupling.

The data associated with an upcoming event may further include data associated with a predicted route, such as, e.g., navigation data. The predicted route may include data about a road inclination, a road curve density, a map and geographic data of the vehicle's journey. Based on the data associated with the predicted route, the distance between the trailer and the vehicle can be adapted. In some examples, the distance between the trailer and the vehicle can be adapted for driving on a highway.

It may be advantageous to control the distance between the trailer and the vehicle based on an upcoming event as it may be possible to have the vehicle and trailer as close as possible to each other when, for example, driving on a highway and when the system knows that there is no requirement to have high manoeuvrability.

Furthermore, by defining the preferred front/rear axle load, energy consumption can be controlled and minimized. Also, energy consumption can be controlled based on data related to energy consumption for the vehicle or a similar vehicle traveling along the same route. Energy consumption will depend on air resistance, i.e. drag coefficient (CD). Hence, the controlling of the distance between the trailer and the vehicle could also be based on known CD values for different settings.

Optionally in some examples, including in at least one preferred example, the controller is configured to determine a preferred distance between the vehicle and the trailer on the basis of at least one of a preferred front and/or rear axle load and data associated with an upcoming event. The controller may then control the fifth wheel to slide along the linear guide such that the preferred distance is set. The preferred distance may have one value when the vehicle combination is about to merge on a highway and another, different, value when the vehicle combination is approaching an uphill or downhill part of a road, or a sharp turn. By determining and setting the distance between the trailer and the vehicle to the preferred distance it may be possible to reduce air drag and thereby improve energy economy of the vehicle combination.

Optionally in some examples, including in at least one preferred example, the controller is configured to control the speed of the vehicle and/or the speed of the trailer to thereby set the distance between the vehicle and the trailer to the determined preferred distance, when the vehicle combination is in motion. Controlling the speed of the vehicle may include acceleration of the vehicle combination or retardation of the vehicle combination. Retardation may be applied by controlling the brakes of the trailer and/or the brakes of the vehicle and/or controlling a propulsion system to achieve an engine brake effect (in ICE vehicles) or recuperation of energy (in electric vehicles) of the vehicle. In some examples, the controller is configured to controllably brake the vehicle and/or the trailer in order to achieve a controlled motion between the vehicle and the trailer. The control of the speed may be based on the at least one of a preferred front and/or rear axle load and data associated with an upcoming event. By controlling the speed of the vehicle/trailer the preferred distance can be achieved, thereby reducing the air drag of the vehicle combination. In one example, both the vehicle brake and the trailer brake may be activated to achieve optimal performance.

Optionally in some examples, including in at least one preferred example, the data associated with an upcoming event include data associated with an upcoming assignment, data associated with a predicted route, and data related to predicted energy consumption for the vehicle. The upcoming assignment may for instance be arriving on a ferry, highway driving, trailer coupling/decoupling, maneuvering, etc. The controller may be preprogrammed with a data set related to the upcoming event, the data set including, e.g., the preferred distance for the vehicle combination when the vehicle combination is on a ferry, or on a highway, or when maneuvering, etc. Typically, the preferred distance for the highway driving is smaller than when the vehicle is maneuvering.

Optionally in some examples, including in at least one preferred example, the system further comprises at least one sensor configured to measure data related to at least one of preferred front and/or rear axle load and data associated with an upcoming event and send the measured sensor data to the controller. The controller may then control the fifth wheel accordingly. The controller may alternatively or additionally control the brakes of the vehicle/trailer based on the sensor measurements. The at least one sensor may be arranged on the vehicle and be connected to the controller. The at least one sensor may be arranged on the trailer and be connected to the controller. The at least one sensor may be a load sensor and may be arranged on a vehicle axle and be configured to measure front/rear axle load. The at least one sensor may measure traction of the vehicle's wheels and/or traction of the trailer's wheels.

Optionally in some examples, including in at least one preferred example, the measured sensor data include at least one of a road inclination, a road curve density, a map and geographic data of the vehicle's journey, navigation data, energy consumption, steering of the vehicle, and traction of the vehicle. Based on the measured sensor data the controller may calculate the preferred distance between the trailer and the vehicle and control the position of the fifth wheel accordingly. The road inclination is typically related to an upcoming event, i.e. to an upcoming road segment. Depending on the road inclination, there will be an optimal distance between the trailer and the vehicle which will result in the best performance of the vehicle combination in terms of air drag and hence energy efficiency. In some examples, the sensors may provide multiple measurements to the controller, and based on these measurements the controller may calculate the preferred position of the fifth wheel and control either the fifth wheel or the brakes or the speed of the vehicle/trailer.

Optionally in some examples, including in at least one preferred example, the at least one sensor is configured to measure a relative difference in speed between a trailer speed and a vehicle speed.at least one sensor may be arranged at the fifth wheel to determine the relative motion between the vehicle and the trailer, and thus the relative speed of the vehicle with respect to the trailer.

In some examples, the at least one sensor is a position sensor and configured to measure a relative position between the vehicle and the trailer. The controller may be configured to control the position of the fifth wheel on the basis of the relative position measured by the sensor. It may be beneficial to measure the relative position between the vehicle and the trailer and to adapt the fifth wheel position based on the relative position as it may result in a better precision of the controller and thereby better precision in positioning of the fifth wheel.

Optionally in some examples, including in at least one preferred example, the controller is configured to receive data related to the at least one of a preferred front and/or rear axle load and data associated with an upcoming event from an external data source. The data related to the at least one of a preferred front and/or rear axle load and data associated with an upcoming event may thus be received from the sensors and/or from the external data source. The controller may then determine, based on the received data, a distance between the vehicle and the trailer. The external data source may be another vehicle, wherein the vehicle combination is in communication with the other vehicle providing the relevant data. In another example, the external data source may be infrastructure connected to the vehicle combination. In some examples, the vehicle may retrieve data associated with regulation of road indicating a maximum front and/or rear axle load from an external source and use the at least one sensor to determine if these requirements are fulfilled.

Optionally in some examples, including in at least one preferred example, the controller is configured to receive a user input and based on the user input determine the preferred distance between the vehicle and the trailer. The user input may be an input from the vehicle driver. In some cases, the vehicle driver may input a request for the distance or select a vehicle mode (e.g. highway mode, ferry mode, coupling/decoupling mode, uphill/downhill mode, etc.). the controller may then adapt the distance between the vehicle and the trailer to meet the requirements associated with the driver input.

Optionally in some examples, including in at least one preferred example, the system further comprises a fifth-wheel position sensor configured to measure the actual position of the fifth-wheel. The controller may then be configured to control the fifth wheel position on the basis of the measured actual position of the fifth-wheel and in addition to the least one of a preferred front and/or rear axle load and the data associated with an upcoming event.

Optionally in some examples, including in at least one preferred example, the controller may control the speed of the vehicle/trailer and wherein controlling the speed includes acceleration or retardation of the vehicle and/or the trailer. By controlling the speed of the vehicle and/or the trailer the distance between the vehicle and trailer can be controller. If, for instance, the trailer is accelerated such that its speed exceeds the speed of the vehicle, the trailer will come closer to the vehicle thereby decreasing the distance between the two. The same can be achieved by slowing down the vehicle. By controlling the speed of the vehicle/trailer, the position of the fifth wheel is indirectly controlled, i.e. it is not the fifth wheel directly that is controlled, but rather, its motion happens as a consequence of speed changes of the vehicle/trailer.

Optionally in some examples, including in at least one preferred example, the retardation of the vehicle is performed by controlling vehicle brakes or by controlling a propulsion system of the vehicle to achieve a decreased speed of the vehicle. The controller may be connected to the vehicle brakes. After determination of the preferred distance between the trailer and the vehicle (a preferred gap), the controller may automatically control the vehicle brakes such that the preferred gap is obtained. Alternatively, or additionally the controller may be configured to control the propulsion system of the vehicle such that the preferred gap is obtained.

Optionally in some examples, including in at least one preferred example, retardation of the trailer is achieved by controlling trailer brakes. The controller may be connected to the trailer brakes. After determination of the preferred gap, the controller may automatically control the trailer brakes such that the preferred gap is obtained. In some examples, both the vehicle brakes and the trailer brakes may be controlled at the same time to thereby set the vehicle and the trailed at the preferred distance.

Optionally in some examples, including in at least one preferred example, the vehicle brake is configured to inhibit motion of the vehicle and thereby cause the fifth wheel to move towards the vehicle. When the vehicle brake causes braking of the vehicle the fifth wheel may be forced by inertia to move forward and towards the vehicle thereby decreasing the distance between the vehicle and the trailer. In some examples, the trailer brake is configured to inhibit motion of the trailer and thereby cause the fifth wheel to move further away from the vehicle. When the trailer brake causes braking of the trailer, the fifth wheel may be forced by inertia to move backward and further away from the vehicle thereby increasing the distance between the vehicle and the trailer.

Optionally in some examples, including in at least one preferred example, the fifth wheel is configured to be continuously slidable along the linear guide. Thereby, any distance between the vehicle and the trailer can be achieved.

Optionally in some examples, including in at least one preferred example, the fifth wheel is configured to move along the linear guide while, at least partly, being driven by inertia. In this way, no need for additional control units or motorized actuators exists. The fifth wheel may be driven by inertia if, for instance, the vehicle brakes thereby causing the fifth wheel to slide forward along the linear guide thereby bringing the trailer closer to the vehicle.

Optionally in some examples, including in at least one preferred example, the linear guide comprises a rack and a pinion. The rack and pinion may be driven only by or at least partly by inertia caused by braking one of the vehicle or trailer. In some examples, the rack and pinion may be at least partly driven by an actuator. The actuator may be connected to the controller. In some examples, the rack and pinion may be driven at least partly by inertia and at least partly by the actuator.

In some examples, the linear guide comprises a linear ball slide. The linear ball slide may also be operated only by inertia. The linear ball slide may be implemented by wheels rotating on one or more tracks. In some cases, the linear ball slide may comprise roller bearings. In some examples, the linear ball slide may be at least party driven by an actuator. The actuator may be connected to the controller which can control the position of the fifth wheel and thereby control the distance between the vehicle and the trailer.

Optionally in some examples, including in at least one preferred example, the linear guide comprises a linear actuator configured to receive a failsafe signal from the controller. The failsafe signal may be a control binary signal, 1 and 0. In some examples, the binary signal may control the rack and pinion to stop its motion (0 signal) or to move forward/backward (1 signal). In another example, the rack and pinion could be partly released, i.e. not allowed to move completely freely driven by inertia. In some cases, if there is an issue in regulating the brakes on the trailer, it may be possible to inhibit the motion of the fifth wheel by actuating the motion of the fifth wheel by the linear actuator. In some examples, it may not be desirable to engage the brakes and therefore the linear actuator may be advantageous. It may be in cases when the vehicle combination is at steady state but small adjustments to speed may be desirable or when reaching a hill in which scenario the trailer may move to the most rearward position when moving and if driven only by inertia. In some examples, the failsafe signal may be equal or just above a first predetermined threshold value configured to cause motion of the fifth wheel along the linear guide. In some examples, the failsafe signal may be below a second predetermined threshold value, the second threshold value configured to cause motion of the fifth wheel from one end of the linear guide to another end of the linear guide, without inertia. In this way, safe operation of the fifth wheel is ensured.

Optionally in some examples, including in at least one preferred example, the failsafe signal is based on the parameters related to a vehicle operating mode measured by the at least one sensor. For instance, the at least one sensor may detect road inclination, i.e. the vehicle combination driving uphill. In this scenario, the controller may send the failsafe signal to the fifth wheel to thereby actuate the fifth wheel forward and towards the vehicle, thereby bringing the trailer closer to the vehicle.

Optionally in some examples, including in at least one preferred example, the system further comprises a locking mechanism. The locking mechanism may be configured to lock the fifth wheel in a specific position. The locking mechanism may be integrated with the linear guide. The locking mechanism may be connected with the controller. The controller may enable and disable the locking mechanism to thereby prevent any unexpected changes of the fifth wheel position.

Optionally in some examples, including in at least one preferred example, the system is configured to connect to a predictive software functionality. The system may further be configured to use the predictive software functionality for setting a pre-selected distance between the vehicle and the trailer.

According to a second aspect of the disclosure, a vehicle comprising the system of the first aspect is provided. The second aspect of the disclosure may seek to may seek to provide a vehicle in which the distance between the vehicle and the trailer is optimized depending on the specific operation of the vehicle combination. In some examples, the second aspect of the disclosure may seek to optimize air drag of the vehicle combination. A technical benefit may include improving energy economy of the vehicle.

According to a third aspect of the disclosure, a method for controlling the distance between a vehicle and a trailer is disclosed. The vehicle and the trailer form a vehicle combination. The vehicle and the trailer are coupled by a fifth wheel mounted on the vehicle. The fifth wheel is guided by a linear guide and configured to perform a longitudinal motion along the vehicle. The method comprises controlling, by a controller, a fifth wheel position on the basis of at least one of a preferred front and/or rear axle load and data associated with an upcoming event, to thereby set the distance between the vehicle and the trailer.

The disclosed aspects, examples, including any preferred examples, and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary system for controlling the distance between a vehicle and a trailer according to an example.
**FIG. 2** shows various implementations of a vehicle combination with a fifth wheel.
**FIG. 3** is an exemplary implementation of a linear guide according to an example.
**FIG. 4** is an exemplary implementation of control of the fifth wheel position according to an example.
**FIG. 5** is an exemplary system of sensors for obtaining measured sensor data measured sensor data used for determination of the fifth wheel position.

### DETAILED DESCRIPTION

The detailed description set forth below provides information and examples of the disclosed technology with sufficient detail to enable those skilled in the art to practice the disclosure.

The present disclosure may seek to optimize the distance between a vehicle and a trailer depending on a specific operation of a vehicle-trailer combination. In some examples, the present disclosure may seek to optimize air drag of the vehicle-trailer combination. A technical benefit may include improving energy economy of the vehicle.

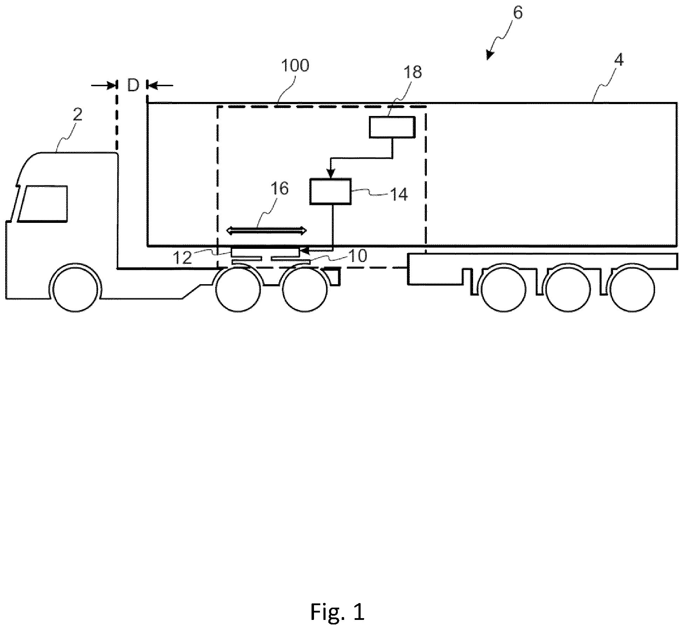

**FIG. 1** is an exemplary system for controlling the distance between a vehicle 2 and a trailer 4 according to an example. The vehicle and the trailer form a vehicle combination 6. The system comprises a fifth wheel 10, a linear guide 12, and a controller 14. The fifth wheel 10 is mounted on the vehicle 2 and configured to couple the trailer 4 to the vehicle 2. The linear guide 12 is for guiding the fifth wheel 10 such that the fifth wheel performs a longitudinal motion along the vehicle, as indicated by arrow 16. The controller 14 is configured to control a fifth wheel position on the basis of at least one of a preferred front and/or rear axle load and data associated with an upcoming event, to thereby set the distance D between the vehicle 2 and the trailer 4. In particular, the distance D may be the distance between the front end of the trailer and the rear end of the vehicle. Depending on the implementation of the vehicle the distance D may be defined differently. If the vehicle comprises a cab and a dolly is attached to the vehicle at the rear part of the vehicle by a typical trailer coupling, the distance D may be defined as the distance between the rear end of the cab and the front end of the trailer. The position of the fifth wheel 10 can be controlled such that the fifth wheel 10 can slide forward, such that the distance D is reduced or it can slide backwards such that the distance D between the trailer and the vehicle is increased. The data associated with an upcoming event may include data associated with an upcoming assignment, data associated with a predicted route, and data related to predicted energy consumption for the vehicle.

The gap between the vehicle and the trailer, defined by the distance D, gives rise to air turbulence which affects the air resistance. Generally, the greater the gap is, the stronger the air turbulence becomes, and the stronger the air turbulence is, the greater the air resistance becomes, at least for distances typically used between a truck and a trailer. Reducing the distance between the vehicle and the trailer leads to reduced air drag and hence reduced fuel consumption of the vehicle. Forward sliding of the fifth wheel may cause reduction of the air resistance of the vehicle combination when the vehicle combination is, e.g., travelling at high speeds and thus improves aerodynamics of the vehicle combination. However, reducing the distance between the vehicle and the trailer can be undesirable in some scenarios, such as when the vehicle combination is turning. Namely, sharp turns may not be possible when the gap between the trailer and the vehicle is small. If the distance between the vehicle and the trailer is too small and the vehicle is turning, damage to the vehicle and/or the trailer may occur. Typically, damage to the cab of the vehicle may occur. Therefore, there is a need for automatic control of the vehicle-trailer distance on the basis of the vehicle use.

The controller 14 may be configured to determine a preferred distance between the vehicle and the trailer on the basis of at least one of a preferred front and/or rear axle load and data associated with an upcoming event. The controller 14 may also be configured to control the speed of the vehicle and/or the speed of the trailer to thereby set the distance between the vehicle and the trailer to the determined preferred distance, when the vehicle combination is in motion.

The system 100 may further comprise at least one sensor 18 configured to measure data related to at least one of preferred front and/or rear axle load and/or data associated with an upcoming event and send the measured sensor data to the controller. The sensor 18 may be placed in the vehicle. In some examples, the at least one sensor may be placed in the trailer. The measured sensor data may include at least one of a road inclination, a road curve density, a map and geographic data of the vehicle's journey, navigation data, energy consumption, steering of the vehicle, and traction of the vehicle. The sensor 18 may be connected to the controller 14 to deliver the measured sensor data, such that the controller may then control the fifth wheel position accordingly. The controller 14 may be connected to the linear guide 12 and configured to send control signals directly to the linear guide 12 to thereby change the position of the fifth wheel. In some examples, the controller is configured to control the speed of the vehicle and/or the speed of the trailer to thereby set the distance between the vehicle and the trailer to the determined preferred distance, when the vehicle combination is in motion. This may be achieved by the controller controlling the brakes of the trailer and/or the vehicle.

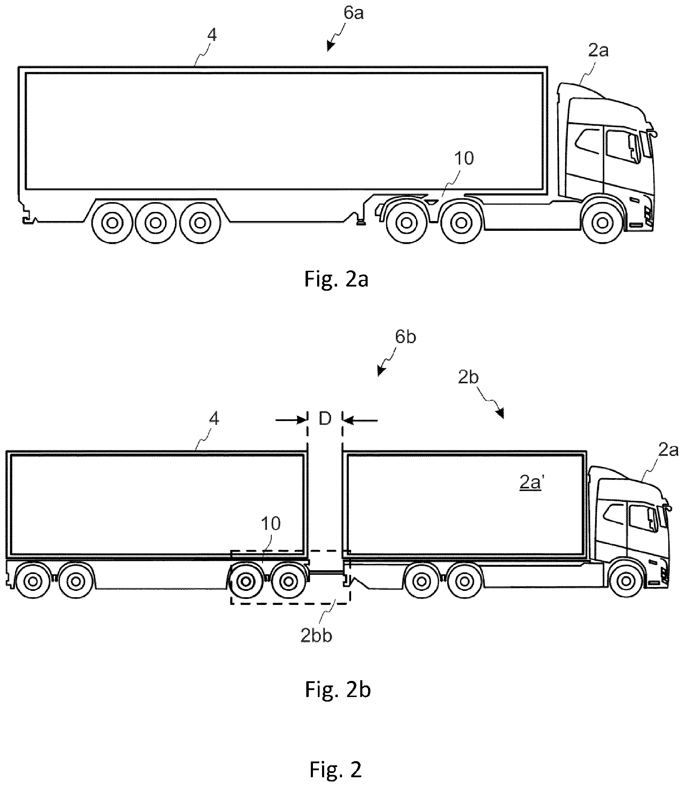

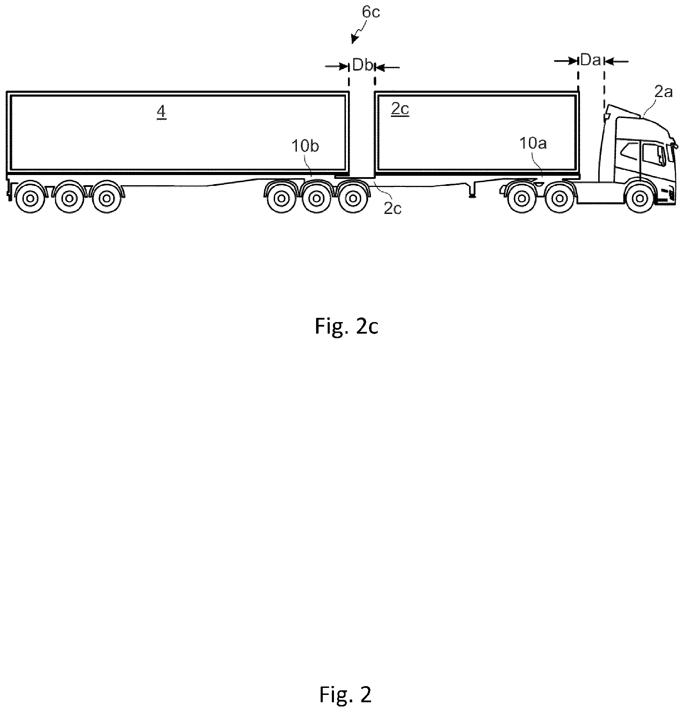

**FIG. 2** shows various implementations of a vehicle combination 6a with a fifth wheel. FIG. 2a shows the first embodiment of a vehicle combination 6a in which the trailer is attached to the truck (tractor unit) through a fifth wheel coupling. The vehicle combination 6a thus comprises a trailer 4 and a tractor unit 2a. The tractor unit 2 comprises a fifth wheel coupling 10 in accordance with the examples of the present disclosure.

FIG. 2b shows the second embodiment of a vehicle combination 6b comprising a trailer 4 and a vehicle 2b. In this embodiment, the vehicle 2b is a rigid truck (box truck) that comprises a tractor unit 2a with a box-trailer 2a' and a dolly 2bb attached to the tractor unit. In this example, the box-trailer 2a' forms an integral part with the tractor unit 2a. The dolly 2bb may be connected to the preceding box truck by a drawbar or by any other trailer/truck coupling typically known in the art. The dolly 2bb comprises a fifth wheel coupling 10 for connecting the trailer 4 to the vehicle 2b. The fifth wheel coupling 10 controls the distance D between the front end of the trailer 4 and the rear end of the vehicle (rigid truck) 2b, i.e. the rear end of the box-trailer 2a' in accordance with the examples of the present disclosure.

In yet another embodiment shown in FIG. 2c, the vehicle may comprise a tractor unit 2a and a link 2c. The link 2c may be connected to the tractor unit 2a by a fifth wheel coupling 10a arranged on the tractor unit 2a which may operate according to the present disclosure. The distance Da may be controlled in accordance with the present disclosure. The link 2c may then be connected to the trailer 4 by a further fifth wheel coupling 10b which may also operate according to the embodiments of the present disclosure. The link 2c may comprise the fifth wheel coupling 10b. In this embodiment, the two fifth wheel couplings 10a, 10b may be controlled by either one controller or be controlled separately by two controllers. The link 2c does not comprise wheels beneath the storage unit but rather a set of wheels is arranged behind the storage unit closer to the trailer 4 (similar to if a dolly would be rigidly attached to the storage unit). The distance Db may also be controlled in accordance with the present disclosure. The trailer 4 could be any of the alternatives described in the text (a wheeled platform, caravan, coach, semi-trailer). In yet another embodiment, the vehicle may be equipped with a fifth wheel coupling to which a semitrailer is coupled. Subsequently, a dolly may be attached to the semi-trailer to which a second semitrailer is attached through a fifth wheel coupling. Both of these fifth wheel couplings may be controlled according to the present disclosure.

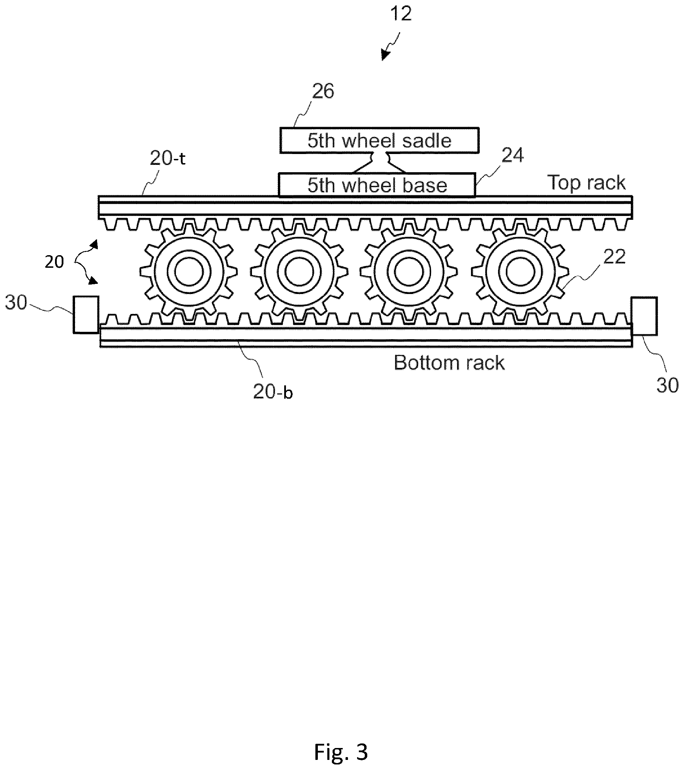

**FIG. 3** is a side view of an exemplary implementation of the linear guide 12 according to one example. According to this example, the linear guide comprises a rack 20 and a pinion 22. The motion of the pinion 22 in the rack 20 may be driven only by or at least partly by inertia caused by braking one of the vehicle or trailer. In some examples, the motion of the pinion 22 within the rack 20 may be at least partly driven by an actuator. The actuator may be connected to the controller. In some examples, the motion of the pinion in the rack may be driven at least partly by inertia and at least partly by the actuator. The rack 20 comprises a top rack 20-t and a bottom rack 20-b and the pinion 22 is arranged therebetween. A fifth wheel base 24 of the fifth wheel (not shown) may be arranged on the top rack 20-t and is connected to the fifth wheel via a fifth wheel saddle 26 of the fifth wheel. The bottom rack 20-b may comprise a locking mechanism 30. The locking mechanism may be configured to lock the fifth wheel in a specific position. In the example shown in FIG. 3, the locking mechanism 30 is placed at the two ends of the bottom rack 20-b to ensure that the fifth wheel cannot move beyond the locking mechanism's 30 end positions. In some examples, the locking mechanism 30 may be purely mechanical lock comprising blocking elements mechanically stopping further motion of the pinion in the rack 20. In some examples, the locking mechanism 30 may be an electrical locking mechanism configured to control the end positions of the pinion 22 inside the rack 20. For instance, the locking mechanism 30 may comprise a position sensor arranged at the rack 20 and detecting the position of the pinion 22 in the rack. When sensor identifies that the pinion 22 is approximately at any of the end points of the rack 20, the sensor may control further motion of the pinion 22.

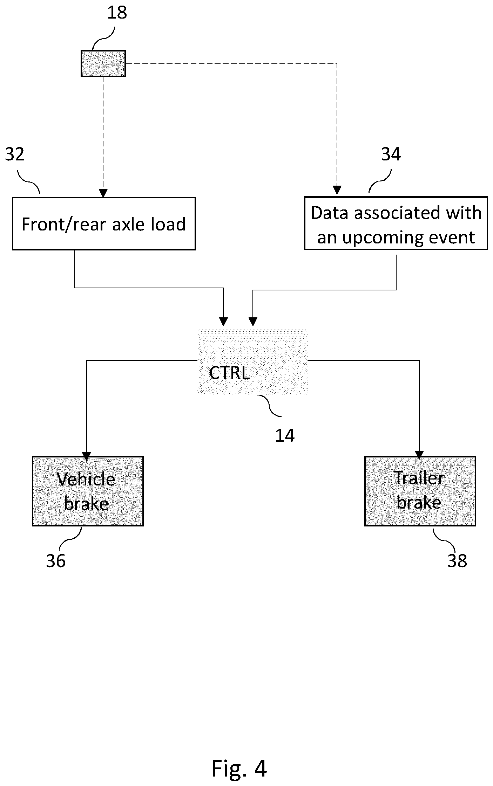

**FIG. 4** is an exemplary implementation of control of the fifth wheel position according to an example. In particular, **FIG. 4** illustrates the controller 14 receiving at least one of a preferred front and/or rear axle load 32 and data associated with an upcoming event 34 and controlling at least one of a vehicle brake 36 or a trailer brake 38 to thereby set the fifth wheel position such that the distance between the vehicle and the trailer is optimal, i.e. preferred. The optimal distance is calculated by the controller 14 on the basis of the received preferred front and/or rear axle load 32 and/or data associated with an upcoming event 34. By controlling the brakes 36/38, the speed of the vehicle/trailer is controlled. The preferred front and/or rear axle load 32 and data associated with an upcoming event 34 may be received from one or more sensors 18.

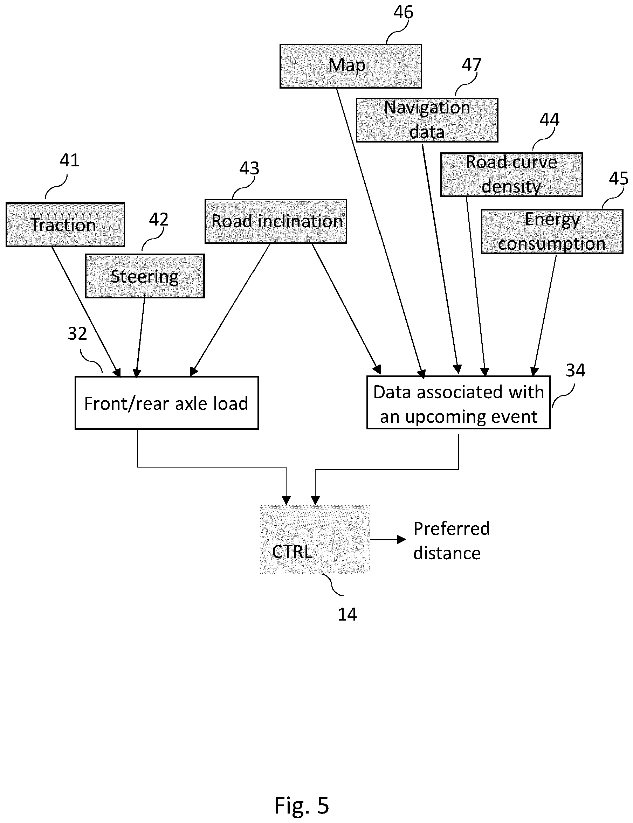

**FIG. 5** is an exemplary system of sensors for obtaining measured sensor data used for determination and control of the fifth wheel position. The system for controlling the distance between the vehicle and the trailer may comprise one or more sensors that provide sensor data to the controller 14. The sensors may be traction sensors 41, steering sensors 42, road inclination sensors 43, road curve density sensors 44, energy consumption sensors 45, geographical map module 46, navigation data module 47, etc. Some sensors (e.g. axle load sensors, traction sensors, steering sensors) may provide measurements related to the front/rear axle load 32, while some sensors (e.g. navigation sensors, inclination sensors, energy monitoring sensors) may provide measurements related to the data associated with an upcoming event 34. Some sensors (e.g. inclination sensors) may provide measurements related to both the front/rear axle load and data associated with an upcoming event. The controller 14 then controls a fifth wheel position on the basis of at least one of a preferred front and/or rear axle load and data associated with an upcoming event, to thereby set the distance between the vehicle and the trailer.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A system for controlling the distance between a vehicle and a trailer, the vehicle and the trailer forming a vehicle combination,
the system comprising:
a fifth wheel mounted on the vehicle and configured to couple the trailer to the vehicle,
a linear guide for guiding the fifth wheel such that the fifth wheel performs a longitudinal motion along the vehicle,
a controller configured to control a fifth wheel position on the basis of at least one of a preferred front and/or rear axle load and data associated with an upcoming event, to thereby set the distance between the vehicle and the trailer.

2. The system of claim 1, wherein the controller is configured to determine a preferred distance between the vehicle and the trailer on the basis of at least one of a preferred front and/or rear axle load and data associated with an upcoming event.

3. The system of claim 2, wherein the controller is configured to control the speed of the vehicle and/or the speed of the trailer to thereby set the distance between the vehicle and the trailer to the determined preferred distance, when the vehicle combination is in motion.

4. The system of any of the preceding claims, further comprising at least one sensor configured to measure data related to at least one of preferred front and/or rear axle load and/or data associated with an upcoming event and send the measured sensor data to the controller.

5. The system of any of the preceding claims, wherein the controller is configured to receive data related to the at least one of a preferred front and/or rear axle load and data associated with an upcoming event from an external data source.

6. The system of any of the preceding claims 2-5, wherein the controller is configured to receive a user input and based on the user input determine the preferred distance between the vehicle and the trailer.

7. The system of any of the preceding claims, further comprising a fifth-wheel position sensor configured to measure the actual position of the fifth-wheel, wherein the controller is configured to control the fifth wheel position on the basis of the measured actual position of the fifth-wheel and wherein controlling the speed includes acceleration or retardation of the vehicle and/or the trailer.

8. The system of claim 7, wherein the retardation of the vehicle is performed by controlling vehicle brakes or by controlling a propulsion system of the vehicle to achieve a decreased speed of the vehicle and wherein retardation of the trailer is achieved by controlling trailer brakes.

9. The system of any of the preceding claims, wherein a vehicle brake is configured to inhibit motion of the vehicle and thereby cause the fifth wheel to move towards the vehicle, and wherein the trailer brake is configured to inhibit motion of the trailer and thereby cause the fifth wheel to move further away from the vehicle.

10. The system of any of the preceding claims, wherein the fifth-wheel is configured to be continuously slidable along the linear guide.

11. The system of any of the preceding claims, wherein the fifth wheel is configured to move along the linear guide by inertia.

12. The system of any of the preceding claims, wherein the linear guide comprises a rack and a pinion, or a linear ball slide.

13. The system of any of the preceding claims, wherein the system is configured to connect to a predictive software functionality and to use the predictive software functionality for setting a pre-selected distance between the vehicle and the trailer.

14. A vehicle comprising the system according to any of claims 1-13.

15. A method for controlling the distance between a vehicle and a trailer, the vehicle and the trailer forming a vehicle combination, the vehicle and the trailer being coupled by a fifth wheel mounted on the vehicle, the fifth wheel being guided by a linear guide and configured to perform a longitudinal motion along the vehicle
the method comprising:
controlling, by a controller, a fifth wheel position on the basis of at least one of a preferred front and/or rear axle load and data associated with an upcoming event, to thereby set the distance between the vehicle and the trailer.
